# EUROPEAN PATENT SPECIFICATION

(11) **EP 4 048 711 B1**
(45) Date of publication and mention of the grant of the patent: **23.08.2023**
(21) Application number: 20792998.5
(22) Date of filing: 23.10.2020
(51) Int. Cl.: C08G 18/02, C08G 18/78, C08G 18/79, C09D 175/04, C09J 175/04, C08G 18/42, C08G 18/48, C08G 18/62, C08G 18/44, C08G 18/63, C08G 18/70

(54) **REMOVAL OF MONOMERIC ALIPHATIC DIISOCYANATE IN AN ALIPHATIC POLYISOCYANATE USING SCAVENGERS**
ENTFERNUNG VON MONOMEREN ALIPHATISCHEN DIISOCYANATEN IN ALIPHATISCHEM POLYISOCYANAT MITTELS FÄNGERN.
SUPPRESSION DE DIISOCYANATES ALIPHATIQUES MONOMÈRES DANS DES POLYISOCYANATES ALIPHATIQUES PAR PIÉGEURS

(30) Priority: 24.10.2019 EP 19205153
(43) Date of publication of application: 31.08.2022
(73) Proprietor: BASF SE, 67056 Ludwigshafen am Rhein (DE)
(72) Inventor: LUCAS, Frederic, 67056 Ludwigshafen (DE); GORDILLO, Alvaro, 67056 Ludwigshafen (DE); SCHAEFER, Harald, 67056 Ludwigshafen (DE); MUELLER, Ulrich, 67435 Neustadt (DE)
(74) Representative: BASF IP Association
(86) International application number: PCT/EP2020/079866
(87) International publication number: WO 2021/078930

(56) References cited:
- US-A- 4 061 662
- US-A1- 2018 079 855
- DATABASE WPI Week 201974 Thomson Scientific, London, GB; AN 2019-760277 XP002801353, & CN 110 183 618 A (CNOOC CHANGZHOU COATING CHEM IND RES INS) 30 August 2019 (2019-08-30)

## Description

### TECHNICAL FIELD

The present invention relates to a process to remove monomeric aliphatic diisocyanate in an aliphatic polyisocyanate using scavengers

### INTRODUCTION

Polyisocyanates with a free monomer (usually diisocyanate) content of ≥0.1 % are a major item in respect to labelling as respiratory sensitizer and registration limitations in respect to REACh (Registration, Evaluation and Authorization process for Europe). Therefore, polyisocyanates with a residual monomer content of <0.1 % to be produced in large scale are specifically of interest.

In the US, polyisocyanates with a free diisocyanate content of ≥ 0.1 % must already be labelled as Class 1 respiratory sensitizers.

Under REACH, systems with a free diisocyanate content ≥ 0.1 % are considered for use restriction within the REACH, Registration, Evaluation and Authorization process.

The reduction of free isocyanate content in polymer compositions using scavenger is rarely described in the prior art.

CN 110 183 618 A discloses the removal of impurities from an aliphatic trimer based on pentylene diisocyanate by means of vacuum distillation. Further, molecular sieve as zeolitic material is added to the hydroxyfunctional compound for drying purposes during the preparation of the hydrophilic curing agent derived from said pentylene diisocyanate trimer. Said curing agent is used for coatings.

US 4061662 (Grace, 14.01.1976) discloses a method of reducing residual unreacted tolylene diisocyanate TDI content in the prepolymer product of toluene diisocyanate with a polyoxyalkylene polyol comprising allowing said prepolymer to flow through a column packed with absorbent type X zeolite molecular sieves.

These molecular sieves of the zeolite type refer to Quarterly Reviews, Vol III, pp 293-330 (1949), "Molecular Sieve Action of Solids", have a pore size of 6-8 Å and a ratio of Na₇O/Al₂O₃/SiO₂ of 1.0/1.0/2.5.

The residual TDI monomer content of 130 g prepolymer from TDI and polyethylene glycol and trimethylol propane was reduced from 2.2 % to 1.0 % by filtration at 50 °C over 105 g type X molecular sieves, which had been dried prior to use for 2 h at 370°C.

The residual TDI monomer content of 111 g prepolymer from TDI and polyethylene glycol was reduced from 0.9 % to 0.3 % by filtration at 70-75 °C over 98 g type X molecular sieves.

### DETAILED DESCRIPTION

Therefore, it was an object of the present invention to provide an improved process for the effective removal of residual monomeric aliphatic isocyanate from a reaction mixture comprising polyisocyanate.

Thus, it has surprisingly been found that use of a scavenger comprising a zeolitic material having a specific silica to alumina molar ratio in a heterogeneous process for removal of monomeric aliphatic diisocyanate in an aliphatic polyisocyanate leads to reduction of monomer content. Contents of even below 0.1 wt% are reached.

Further, it has been found that the scavenger does not destroy the polyisocyanate during the process.

Therefore, the present invention relates to a process for the effective removal of residual monomeric aliphatic isocyanate from a reaction mixture comprising aliphatic polyisocyanate comprising
(i) providing a reactor containing a scavenger comprising a zeolitic material, wherein the zeolitic material comprises SiO₂ and optionally X₂O₃ in its framework structure, wherein X is a trivalent element;
(ii) providing a reaction mixture comprising aliphatic polyisocyanate and monomeric aliphatic isocyanate;
(iii) contacting the scavenger in the reactor with the reaction mixture provided in (ii) at a temperature lower than the boiling point of the residual monomeric aliphatic isocyanate for obtaining a product comprising aliphatic polyisocyanate with a reduced monomeric aliphatic isocyanate content,
wherein if the zeolitic material comprises X₂O₃, the zeolitic material has an SiO₂ to X₂O₃ molar ratio higher than 2.8:1, preferably higher than 5:1, more preferably higher than 30:1.

The monomeric aliphatic isocyanates are preferably isocyanates having 4 to 20 carbon atoms. Examples of typical diisocyanates are aliphatic diisocyanates such as tetra methylene 1,4-diisocyanate, pentamethylene 1,5-diisocyanate, hexamethylene 1,6-diisocyanate (1,6 diisocyanatohexane), 2-methyl pentamethylene 1,5-diisocyanate, octa-methylene diisocyanate, decamethylene diisocyanate, dodecamethylene diisocyanate, tetradecamethylene diisocyanate, derivatives of lysine diisocyanate (e.g. lysine methyl ester diisocyanate, lysine ethyl ester diisocyanate), trimethylhexane diisocyanate or tetramethylhexane diisocyanate, cycloaliphatic diisocyanates such as 1,4-, 1,3- or 1,2-diisocyanatocyclo-hexane, 4,4'- or 2,4'-di(isocyanatocyclohexyl)-methane, 1-isocyanato-3,3,5-trimethyl-5-(iso-cyanatomethyl)cyclohexane (isophorone diisocyanate), 1,3- or 1,4-bis(isocyanatomethyl)cyclohexane or 2,4-, or 2,6-diisocyanato-1-methylcyclohexane, and also 3 (or 4), 8 (or 9) bis(isocyanatomethyl)tricyclo-[5.2.1.02,6]decane isomer mixtures, 1,3-bis(1-isocyanato-1-methylethyl)benzene.

Particular preference is given to pentamethylene 1,5-diisocyanate, hexamethylene 1,6-diisocyanate, 1,3-bis(isocyanatomethyl)cyclohexane, isophorone diisocyanate, and 4,4'- or 2,4'-di(isocyanatocyclohexyl)methane, very particular preference to isophorone diisocyanate and hexamethylene 1,6-diisocyanate, and especial preference to hexamethylene 1,6-diisocyanate.

Mixtures of said isocyanates may also be present.

For the present invention it is possible to use not only those diisocyanates obtained by phosgenating the corresponding amines but also those prepared without the use of phosgene, i.e., by phosgene-free processes. According to EP-A-0 126 299 (US 4 596 678), EP-A-126 300 (US 4 596 679), and EP-A-355 443 (US 5 087 739), for example, (cyclo)aliphatic diisocyanates, such as hexamethylene 1,6-diisocyanate (HDI), isomeric aliphatic diisocyanates having 6 carbon atoms in the alkylene radical, 4,4'- or 2,4'-di(isocyanatocyclohexyl)methane, and 1-isocyanato-3-isocyanatomethyl-3,5,5-trimethylcyclohexane (isophorone diisocyanate or IPDI) can be prepared by reacting the (cyclo)aliphatic diamines with, for example, urea and alcohols to give (cyclo)aliphatic biscarbamic esters and subjecting said esters to thermal cleavage into the corresponding diisocyanates and alcohols. The synthesis takes place usually continuously in a circulation process and optionally in the presence of N-unsubstituted carbamic esters, dialkyl carbonates, and other by-products recycled from the reaction process. Diisocyanates obtained in this way generally contain a very low or even unmeasurable fraction of chlorinated compounds, which is advantageous, for example, in applications in the electronics industry.

In one embodiment of the present invention the isocyanates used have a hydrolyzable chlorine content of less than 100 ppm, preferably of less than 50 ppm, in particular less than 30 ppm, and especially less than 20 ppm. This can be measured by means, for example, of ASTM specification D4663-98. The total chlorine contents are, for example below 1000 ppm, preferably below 800 ppm, and more preferably below 500 ppm (determined by argentometric titration after hydrolysis).

It will be appreciated that it is also possible to employ mixtures of those monomeric isocyanates which have been obtained by reacting the (cyclo)aliphatic diamines with, for example, urea and alcohols and cleaving the resulting (cyclo)aliphatic biscarbamic esters, with those diisocyanates which have been obtained by phosgenating the corresponding amines.

The monomeric isocyanate mixture may also contain catalysts.

Examples of catalysts which can be used include tertiary amines, phosphines, alkali metal phenoxides, amino silanes, quaternary ammonium hydroxides, and quaternary ammonium carbonates. Further suitable oligomerization catalysts are hydroxides, halides (specifically fluorides HₙFₙ₊₁ with n ≥0) or carboxylates of (hydroxy)tetraalkyl(aralkyl)ammonium ions or tetraalkyl phophonium ions, as well as alkali metal salts or tin, zinc or bismuth salts of alkylcarboxylic acids. Depending on the catalyst it is also possible to use various cocatalysts such as, for example, alcohols, phenol(s), OH-functionalized compounds or Mannich bases formed from secondary amines and aldehydes and/or ketones.

For the purpose of oligomerization, the (cyclo)aliphatic diisocyanates can be reacted in the presence of the catalyst, with the use if appropriate of solvents and/or auxiliaries, until the desired conversion is reached. Thereafter the reaction is terminated by deactivation of the catalyst and the excess monomeric diisocyanate is removed by distillation. Deactivation is accomplished thermally or by adding a catalyst inhibitor. Depending on the type of catalyst used and the reaction temperature, polyisocyanates having different fractions of isocyanurate and/or uretdione groups are obtained.

The aliphatic polyisocyanates are preferably compounds as follows:
1) Polyisocyanates containing isocyanurate groups and derived from aliphatic and/or cycloaliphatic diisocyanates. Preference is given in this context to those based on hexamethylene diisocyanate, isophorone diisocyanate and pentamethylene diisocyanate. The isocyanurates present are, in particular, tris-isocyanatoalkyl and/or trisisocyanatocycloalkyl isocyanurates, which constitute cyclic trimers of the diisocyanates, or are mixtures with their higher homologs containing more than one isocyanurate ring. The isocyanatoisocyanu-rates generally have an NCO content of 10% to 30% by weight, in particular 15% to 26% by weight, and an average NCO functionality of 2.6 to 8.
2) Polyisocyanates containing uretdione groups and having aliphatically and/or cycloaliphatically attached isocyanate groups, preferably those derived from hexamethylene diisocyanate, isophorone diisocyanate or pentamethylene diisocyanate. Uretdione diisocyanates are cyclic dimerization products of diisocyanates.
   The polyisocyanates containing uretdione groups are obtained in the context of this invention as a mixture with other polyisocyanates, more particularly those specified under 1). For this purpose, the diisocyanates can be reacted under reaction conditions under which not only uretdione groups but also the other polyisocyanates are formed, or the uretdione groups are formed first and are subsequently reacted to give the other polyisocyanates, or the diisocyanates are first reacted to give the other polyisocyanates, which are subsequently reacted to give products containing uretdione groups.
3) Polyisocyanates containing biuret groups and having cycloaliphatically or aliphatically attached, preferably tris(6-isocyanatohexyl)biuret or its mixtures with its higher homologs. These polyisocyanates containing biuret groups generally have an NCO content of 18% to 24% by weight and an average NCO functionality of 2.8 to 6.
4) Polyisocyanates containing urethane and/or allophanate groups and having aliphatically or cycloaliphatically attached, preferably such as may be obtained, for example, by reacting excess amounts of diisocyanate, such as of hexamethylene diisocyanate or of isophorone diisocyanate, with mono- or polyhydric alcohols (a). These polyisocyanates containing urethane and/or allophanate groups generally have an NCO content of 12% to 24% by weight and an average NCO functionality of 2.1 to 4.5. Polyisocyanates of this kind containing urethane and/or allophanate groups may be prepared without catalyst or, preferably, in the presence of catalysts, such as ammonium carboxylates or ammonium hydroxides, for example, or allophanatization catalysts, such as Zn(ll) compounds, for example, in each case in the presence of monohydric, dihydric or polyhydric, preferably monohydric, alcohols. The polyisocyanates containing urethane and/or allophanate groups can also be prepared in a mixture with other polyisocyanates, more particularly those specified under 1).
5) Polyisocyanates comprising oxadiazinetrione groups, derived preferably from hexamethylene diisocyanate, isophorone diisocyanate or pentamethylene diisocyanate. Polyisocyanates of this kind comprising oxadiazinetrione groups are accessible from diisocyanate and carbon dioxide.
6) Polyisocyanates comprising iminooxadiazinedione groups (asymmetric isocyanurate), derived preferably from hexamethylene diisocyanate, isophorone diisocyanate or pentamethylene diisocyanate. Polyisocyanates of this kind comprising iminooxadiazinedione groups are preparable from diisocyanates by means of specific catalysts. The polyisocyanates containing urethane and/or allophanate groups can also be prepared in a mixture with other polyisocyanates, preferably those specified under 1)
7) Uretonimine-modified polyisocyanates.
8) Carbodiimide-modified polyisocyanates.
9) Hyperbranched polyisocyanates, of the kind known for example from DE A1 10013186 or DE-A1 10013187.
10) Hydrophilically modified polyisocyanates, preferably polyisocyanates specified under 1) or 6), which are hydrophilically modified by e.g. polyetherol, sulfonate and/or phosphate, optionally neutralizing acidic groups with amines, e.g. trialkylamines as e.g. trimethylamine or dimethylcyclohexylamine.

The diisocyanates or polyisocyanates recited above may also be present at least partly in blocked form.

Classes of compounds used for blocking are described in D.A. Wicks, Z.W. Wicks, Progress in Organic Coatings, 36, 148-172 (1999), 41, 1-83 (2001), and 43, 131-140 (2001).

Examples of classes of compounds used for blocking are phenols, imidazoles, triazoles, pyrazoles, oximes, N-hydroxyimides, hydroxybenzoic esters, secondary amines, lactams, CH-acidic cyclic ketones, malonic esters or alkyl acetoacetates.

In one preferred embodiment of the present invention the polyisocyanate is selected from the group consisting of isocyanurates, biurets, urethanes, iminooxadiazinediones and allophanates, preferably from the group consisting of isocyanurates, biurets, and iminooxadiazinediones; with particular preference it is a polyisocyanate containing biuret and/or iminooxadiazinedione groups.

In one particularly preferred embodiment the polyisocyanate encompasses polyisocyanates comprising biuret groups and/or iminooxadiazinedione groups and obtained from hexamethylene 1,6-diisocyanate.

In one further preferred embodiment the polyisocyanate encompasses a mixture of polyisocyanates comprising isocyanurate groups and obtained very preferably from hexamethylene 1,6-diisocyanate and from isophorone diisocyanate.

In one particularly preferred embodiment the polyisocyanate is a mixture comprising low-viscosity polyisocyanates, preferably polyisocyanates comprising isocyanurate groups, having a viscosity of 600-1500 mPa*s, more particularly below 1200 mPa*s, low-viscosity urethanes and/or allophanates having a viscosity of 200-1600 mPa*s, more particularly 600-1500 mPa*s, and/or polyisocyanates comprising iminooxadiazinedione groups.

In this specification, unless noted otherwise, the viscosity is reported at 23°C in accordance with DIN EN ISO 3219/A.3 in a cone/plate system with a shear rate of 1000 s⁻¹.

It is preferred that the mixture provided in (ii) and contacted with the scavenger in (iii) contains less than 8 wt.-%, more preferably less than 6 wt.-%, more preferably less than 4 wt.-%, more preferably less than 2 wt.-%, more preferably less than 1 wt.-%, more preferably less than 0.5 wt.-%, more preferably less than 0.1 wt.-%, more preferably less than 0.05 wt.-%, and more preferably less than 0.01 wt.-% of water based on 100 wt.-% of the reaction mixture.

It is preferred that the zeolitic material has a framework structure selected from the group consisting of BEA, FAU, GME, MOR, OFF, FER, HEU, MEL, MFI, MWW, RRO, TON, and mixed structures of two or more thereof, more preferably from the group consisting of BEA, FAU, MOR, FER, MFI, and a mixed structure thereof, more preferably the zeolitic material has the framework structure FAU.

It is preferred that 5 weight-% or more of the scavenger consist of the zeolitic material, more preferably 10 weight-% or more, more preferably 30 weight-% or more, more preferably 50 weight-% or more, more preferably 70 weight-% or more, more preferably 80 weight-% or more, more preferably 90 weight-% or more, more preferably 95 to 100 weight-%, preferably from 99 to 100 weight-%, and more preferably from 99.5 to 100 weight-% of the scavenger consist of the zeolitic material.

It is preferred that the scavenger is provided as a powder and/or as a molding, preferably as an extrudate.

According to the present invention, a molding is to be understood as a three-dimensional entity obtained from a shaping process; accordingly, the term "molding" is used synonymously with the term "shaped body".

It is preferred that X is selected from the group consisting of B, Al, Ga, In, Sc, Y, La, Ce, Pr, Nd, Pm, Sm, Eu, Gd, Tb, Dy, Ho, Er, Tm, Yb, Lu, and mixtures of two or more thereof, preferably from the group consisting of B, Al, Ga, In, Ti, La, and mixtures of two or more thereof, wherein preferably X is Al and/or B, wherein more preferably X is Al.

The zeolitic material has an SiO₂ to X₂O₃ molar ratio of 2.8:1 or greater, preferably in the range of 5.0:1 or greater, more preferably of 30:1 or greater, more preferably of from 30:1 to 200:1, more preferably of from 30:1 to 175:1, more preferably of from 30:1 to 150:1, more preferably of from 30:1 to 125:1, more preferably of from 30:1 to 100:1, more preferably of from 30:1 to 90:1, more preferably of from 30:1 to 80:1, more preferably of from 30:1 to 70:1, more preferably of from 30:1 to 60:1, more preferably of from 30:1 to 50:1, more preferably of from 30:1 to 45:1, more preferably of from 30:1 to 40:1, more preferably of from 30:1 to 37:1, more preferably of from 30:1 to 35:1.

As disclosed above, it is preferred that the zeolitic material has the FAU framework structure type. It is particularly preferred that in the case where the zeolitic material has the FAU framework structure type the zeolitic material contains one or zeolites having an FAU-type framework structure selected from the group consisting of, zeolite Y, ECR-30, ZSM-20, LZ-210, SAPO-37, US-Y, CSZ-1, ZSM-3, Faujasite, and mixtures of two or more thereof,
more preferably from the group consisting of zeolite Y, ECR-30, ZSM-20, LZ-210, US-Y, CSZ-1, ZSM-3, Faujasite, and mixtures of two or more thereof, more preferably from the group consisting of zeolite Y, ZSM-20, ZSM-3, Faujasite, and mixtures of two or more thereof, wherein more preferably the one or more zeolites having an FAU-type framework structure comprise zeolite Y.

It is preferred that the zeolitic material is in the ammonium-form or in the H- form, more preferably in the H-form.

No particular restriction applies as regards the chemical or physical nature of the zeolitic material. It is preferred that the zeolitic material comprises a concentration of acid sites in the range of from 0.100 to 4.000 mmol/g at a temperature in the range of from 190 to 550 °C, more preferably in the range of from 0.200 to 2.000 mmol/g at a temperature in the range of from 205 to 400 °C, preferably as determined by temperature programmed desorption of ammonia (NH₃-TPD).

It is preferred that the zeolitic material has a crystallinity in the range of from 50 to 100 weight-%, more preferably from 75 to 100 weight-%, more preferably from 80 to 100 weight-%, and more preferably from 90 to 100 weight.

As regards the content of SiO₂, calculated as the element Si, contained in the zeolitic material, no particular restriction applies. It is preferred that SiO₂, calculated as the element Si, is contained in the zeolitic material in the range of from 35.0 to 47.0 weight-%, more preferably in the range of from 38.5 to 43.5 weight-%, more preferably in the range of from 40.0 to 42.0 weight-%, based on the total weight of the zeolitic material.

It is preferred that X₂O₃, calculated as X, is contained in the zeolitic material in the range of from 1.0 to 4.5 weight-%, more preferably in the range of from 2.2 to 3.7 weight-%, more preferably in the range of from 2.9 to 3.3 weight-%, based on the total weight of the zeolitic material.

It is preferred that the zeolitic material has a BET specific surface area equal or greater than 380 m²/g, more preferably equal or greater than 650 m²/g, more preferably in the range of from 700 to 800 m²/g.

It is preferred that the zeolitic material has a Langmuir specific surface area equal or greater than 500 m²/g, more preferably equal or greater than 800 m²/g, more preferably in the range of from 810 to 1100 m²/g.,

It is preferred that the zeolitic material provided in (i) is a calcined zeolitic material, wherein the zeolitic material has been calcined at a temperature in the range of from 300 to 900°C, more preferably of from 400 to 700°C, more preferably of from 400 to 650°C, and more preferably of from 400 to 600°C.

It is preferred that the zeolitic material can be regenerated. During regeneration the organic isocyanates are burned, preferably at a temperature in the range of from 300 to 900°C.

Depending on the mass of the precursor of the molding to be calcined, the duration of calcining should have been adjusted. It is preferred that the zeolitic material has been calcined for a duration of from 0.5 to 24 h, more preferably from 1 to 15 h, more preferably from 2 to 12 h, more preferably from 2.5 to 9 h, more preferably from 3 to 7 h, more preferably from 3.5 to 6.5 h, and more preferably from 4 to 6 h.

As regards the temperature at which in (iii) the contacting of the scavenger with the reaction mixture provided in (ii) is conducted, no particular restriction applies. It is preferred that in (iii) the contacting of the scavenger with the reaction mixture provided in (ii) is conducted at a temperature up to 105 °C, more preferably up to 85 °C. The viscosity of the reaction mixture provided in (ii) at room temperature has to be considered in that way that the temperature at the conducted process hat to guarantee sufficient flowability of the reaction mixture provided in (ii).

As regards the pressure at which in (iii) the contacting of the scavenger with the reaction mixture provided in (ii) is conducted, no particular restriction applies. It is preferred that in (iii) the contacting of the scavenger with the reaction mixture provided in (ii) is conducted at a pressure in the range of from 1 to 30 bar(abs), more preferably in the range of from 1 to 20 bar(abs), more preferably in the range of from 1 to 15 bar(abs), more preferably in the range of from 1 to 10 bar(abs), more preferably in the range of from 1 to 5, more preferably in the range of from 1 to 3 bar(abs).

It is preferred that the process is conducted as a batch process or as a continuous process. It is particularly preferred that the process is conducted as a continuous process.

As disclosed above, the process may comprise further process steps. It is preferred that the process further comprises
(iv) separating aliphatic polyisocyanate from the product to obtain aliphatic polyisocyanate and a residual mixture;
(v) recycling at least a portion of the residual mixture in the reaction mixture in (ii), wherein zeolitic material is regenerated by burning the organic isocyanates.

As disclosed above, the process may comprise further process step of filtrating the product.

As regards the molar ratio of aliphatic polyisocyanate to monomeric aliphatic isocyanate in the reaction mixture prepared in (ii), no particular restriction applies. It is preferred that in the reaction mixture provided in (ii), the molar ratio of aliphatic polyisocyanate to monomeric aliphatic isocyanate is in the range of from 98.0:2.0 to 99.97:0.03, preferably of from 99.0:1.0 to 99.97:0.03, more preferably of from 99.5:0.5 to 99.97:0.03, most preferably of from 99.7:0.3 to 99.95:0.05.

It is preferable that the residual monomer content is as low as possible before the process. Usually the synthesis of the reaction mixture provided in (ii) is accompanied by distillation. As well reaction mixture may be provided from an extraction method for monomer from reaction mixture according to WO 202016117 and WO 202016118.

As disclosed above, the process may be carried out as a batch process. In the case where the process is conducted as a batch process, it is preferred that contacting in (iii) is carried out for a duration in the range of from 0.1 to 6000 min, more preferably in the range of from 0.5 to 200 min, more preferably in the range of from 1 to 150 min, more preferably in the range of from 5 to 150 min.

As disclosed above, the scavenger may be provided as a molding. In the case where the scavenger is provided as a molding, it is preferred that the molding is prepared according to a process comprising
(a) preparing a mixture comprising the zeolitic material and optionally one or more binders;
(b) shaping the mixture, preferably by extruding to obtain a shaped material;
(c) optionally drying the shaped material in a gas atmosphere;
(d) calcining the shaped material obtained from (b) or (c) in a gas atmosphere to obtain the molding.

In the case where the process comprises (a), (b), (c), and (d) as disclosed above, it is preferred that the mixture comprises one or more binders, wherein the one or more binders is one or more of alumina, silica, silica-alumina, graphite, zirconium oxide, titanium oxide, a polysaccharide, a sugar alcohol and a synthetic polymer, more preferably one or more of alumina, silica, silica-alumina, graphite, a sugar alcohol, a synthetic polymer, cellulose, a modified cellulose and a starch, more preferably silica, alumina, silica-alumina, graphite, a sugar alcohol, a synthetic polymer, a microcrystalline cellulose, a cellulose ether, more preferably graphite, sorbitol, mannitol, polyethylene glycol (PEG), polyvinylpyrrolidone (PVP), hydroxypropyl cellulose (HPC), hydroxypropyl methylcellulose (HPMC), and sodium carboxymethyl cellulose.

Further in the case where the process comprises (a), (b), (c), and (d) as disclosed above, it is preferred that in the mixture according to (a), the weight ratio of the one or more binders relative to the zeolitic material is in the range of from 1:10 to 1:30, more preferably in the range of from 1:15 to 1:25.

Further in the case where the process comprises (a), (b), (c), and (d) as disclosed above, it is preferred that the process comprises drying according to (c), wherein drying is conducted in a gas atmosphere having a temperature in the range of from 90 to 150 °C, more preferably at a temperature in the range of from 110 to 130 °C, wherein preferably the drying is conducted for 10 to 15 h, more preferably for 11 to 13 h.

Further in the case where the process comprises (a), (b), (c), and (d) as disclosed above, it is preferred that the gas atmosphere in (d) has a temperature in the range of from 400 to 600 °C, more preferably in the range of from 450 to 550 °C, wherein preferably the calcining is conducted for 3 to 7 h, more preferably for 4 to 6 h.

Further in the case where the process comprises (a), (b), (c), and (d) as disclosed above, it is preferred that the gas atmosphere in one or more of (c) and (d) comprises one or more of nitrogen, oxygen, and argon, dried air, preferably dried air.

Within the meaning of the present invention, a specific value of relative humidity is not particularly restricting with respect to the atmosphere which displays said specific value in relative humidity such that in principle the value may relate to any suitable atmosphere displaying said value in relative humidity such as e.g. air or an atmosphere of an inert gas such as nitrogen, argon, or mixtures thereof. According to the present invention it is however preferred that a specific relative humidity refers to the relative humidity of an atmosphere selected among the group consisting of air, nitrogen, argon, and mixtures of two or more thereof, wherein more preferably the specific relative humidity refers to an atmosphere of nitrogen and/or argon displaying said level of relative humidity, more preferably to an atmosphere of nitrogen displaying said specific level in relative humidity.

According to the present invention, a molding is to be understood as a three-dimensional entity obtained from a shaping process; accordingly, the term "molding" is used synonymously with the term "shaped body".

The unit bar(abs) refers to an absolute pressure of 10⁵ Pa and the unit Angstrom refers to a length of 10⁻¹⁰ m.

Optionally a solvent or solvent mixture is present in the reaction mixture provided in (ii).

Solvents which can be present are those which contain no groups that are reactive toward isocyanate groups or blocked isocyanate groups, and in which the polyisocyanates are soluble to an extent of at least 10%, preferably at least 25%, more preferably at least 50%, very preferably at least 75%, more particularly at least 90%, and especially at least 95% by weight.

Examples of solvents of this kind are aromatic hydrocarbons (including alkylated benzenes and naphthalenes) and/or (cyclo)aliphatic hydrocarbons and mixtures thereof, chlorinated hydrocarbons, ketones, esters, alkoxylated alkyl alkanoates, ethers, and mixtures of the solvents.

Preferred aromatic hydrocarbon mixtures are those which comprise predominantly aromatic C₇ to C₁₄ hydrocarbons and may encompass a boiling range from 110 to 300°C; particular preference is given to toluene, o-, m- or p-xylene, trimethylbenzene isomers, tetramethylbenzene isomers, ethylbenzene, cumene, tetrahydronaphthalene, and mixtures comprising them.

Examples thereof are the Solvesso^{®} products from ExxonMobil Chemical, especially Solvesso^{®} 100 (CAS No. 64742-95-6, predominantly C₉ and C₁₀ aromatics, boiling range about 154 - 178°C), 150 (boiling range about 182 - 207°C), and 200 (CAS No. 64742-94-5), and also the Shellsol^{®} products from Shell, Caromax^{®} (e.g., Caromax^{®} 18) from Petrochem Carless, and Hydrosol from DHC (e.g., as Hydrosol^{®} A 170). Hydrocarbon mixtures comprising paraffins, cycloparaffins, and aromatics are also available commercially under the names Kristalloel (for example, Kristalloel 30, boiling range about 158 - 198°C or Kristalloel 60: CAS No. 64742-82-1), white spirit (for example likewise CAS No. 64742-82-1) or solvent naphtha (light: boiling range about 155 - 180°C, heavy: boiling range about 225 - 300°C). The aromatics content of such hydrocarbon mixtures is generally more than 90%, preferably more than 95%, more preferably more than 98%, and very preferably more than 99% by weight. It may be advisable to use hydrocarbon mixtures having a particularly reduced naphthalene content.

Examples of (cyclo)aliphatic hydrocarbons include decalin, alkylated decalin, and isomer mixtures of linear or branched alkanes and/or cycloalkanes.

The amount of aliphatic hydrocarbons is generally less than 5%, preferably less than 2.5%, and more preferably less than 1% by weight.

Esters are, for example, n-butyl acetate, ethyl acetate, ethyl-ethoxy-propionate, butoxy-butylacetate, 1-methoxyprop-2-yl acetate, and 2-methoxyethyl acetate.

Ethers are, for example, THF, dioxane, and also the dimethyl, diethyl or di-n-butyl ethers of ethylene glycol, diethylene glycol, triethylene glycol, propylene glycol, dipropylene glycol or tripropylene glycol.

Ketones are, for example, acetone, diethyl ketone, ethyl methyl ketone, isobutyl methyl ketone, methyl amyl ketone and tert-butyl methyl ketone.

Preferred solvents are n-butyl acetate, ethyl acetate, 1-methoxyprop-2-yl acetate, 2-methoxyethyl acetate, and also mixtures thereof, more particularly with the aromatic hydrocarbon mixtures recited above, especially xylene and Solvesso^{®} 100.

Mixtures of this kind may be prepared in a volume ratio of 5:1 to 1:5, preferably in a volume ratio of 4:1 to 1:4, more preferably in a volume ratio of 3:1 to 1:3, and very preferably in a volume ratio of 2:1 to 1:2.

Preferred examples are butyl acetate/xylene, methoxypropyl acetate/xylene 1:1, butyl acetate/solvent naphtha 100 1:1, butyl acetate/Solvesso^{®} 100 1:2, and Kristalloel 30/Shellsol^{®} A 3:1.

Preference is given to butyl acetate, 1-methoxyprop-2-yl acetate, methyl amyl ketone, xylene, and Solvesso^{®} 100.

It is possible as well, furthermore, for at least one typical coatings additives (F) to be present in the reaction mixture provided in (ii).

Typical coatings additives (F) used may be the following, for example: other antioxidants, UV stabilizers such as UV absorbers and suitable free-radical scavengers (especially HALS compounds, hindered amine light stabilizers), activators (accelerators), drying agents, fillers, pigments, dyes, antistatic agents, flame retardants, thickeners, thixotropic agents, surface-active agents, viscosity modifiers, plasticizers or chelating agents. UV stabilizers are preferred.

The product comprising aliphatic polyisocyanate of the invention can be used with advantage as curing agent components additionally to at least one binding agent in polyurethane coating materials.

The reaction with binding agents may take place, where appropriate, after a long period of time, necessitating storage of the polyisocyanate composition accordingly. Polyisocyanate composition is stored preferably below 30 °C, preferably below 25 °C, specifically at "room temperature" (23 °C). Heating of such polyisocyanate compositions to 40°C, 60°C and even up to 80°C is entirely possible temporarily, e.g. during transport. The higher the storage temperature and the longer the storage time the higher the back-split of monomer. This specifically is valid for biuret, asymmetric isocyanurate and uretdione functional groups.

The binding agents may be, for example, polyacrylate polyols, polyester polyols, polyether polyols, polyurethane polyols; polyurea polyols; polyester-polyacrylate polyols; polyester-polyurethane polyols; polyurethane-polyacrylate polyols, polyurethane-modified alkyd resins; fatty acid-modified polyester-polyurethane polyols, copolymers with allyl ethers, graft polymers of the stated groups of compound having, for example, different glass transition temperatures, and also mixtures of the stated binding agents. Preference is given to polyacrylate polyols, polyester polyols, and polyurethane polyols.

Preferred OH numbers, measured in accordance with DIN 53240-2 (by potentiometry), are 40-350 mg KOH/g resin solids for polyesters, preferably 80-180 mg KOH/g resin solids, and 15-250 mg KOH/g resin solids for polyacrylate polyols, preferably 80-160 mg KOH/g.

Additionally, the binding agents may have an acid number in accordance with DIN EN ISO 3682 (by potentiometry) of up to 200 mg KOH/g, preferably up to 150 and more preferably up to 100 mg KOH/g.

Polyurethane coating materials of this kind are especially suitable for applications requiring particularly high application reliability, exterior weathering resistance, optical qualities, solvent resistance, chemical resistance, and water resistance.

The two-component coating compositions and coating formulations obtained are suitable for coating substrates such as wood, wood veneer, paper, cardboard, paperboard, textile, film, leather, nonwoven, plastics surfaces, glass, ceramic, mineral building materials, such as molded cement blocks and fiber-cement slabs, or metals, which in each case may optionally have been precoated or pre-treated.

Coating compositions of this kind are suitable as or in interior or exterior coatings, i.e., in those applications where there is exposure to daylight, preferably of parts of buildings, coatings on (large) vehicles and aircraft, and industrial applications, utility vehicles in agricultural, construction and earth moving equipment (ACE), decorative coatings, bridges, buildings, power masts, tanks, containers, pipelines, power stations, chemical plants, ships, cranes, posts, sheet piling, valves, pipes, fittings, flanges, couplings, halls, roofs, and structural steel, furniture, windows, doors, woodblock flooring, can coating and coil coating, for floor coverings, such as in parking levels or in hospitals and in particular in automotive finishes, as OEM and refinish application.

In particular the coating compositions of the invention are used as clearcoat, basecoat, and topcoat material(s), primers, and surfacers.

### Examples

### Scavengers:

Scavenger E = Inventive Example
Scavenger C = Comparative example
Scavenger E1 = Zeolite HY (CBV 760, Zeolyst) with SiO₂/Al₂O₃ mole ratio 60:1, nominal cation form H⁺, Unit cell size 24 Å and surface area 720 m²/g
Scavenger E2 = Zeolite NaY (CBV 100, Zeolyst) with SiO₂/Al₂O₃ mole ratio 5.1:1, nominal cation form Na⁺, Unit cell size 24.65 Å and surface area 900 m²/g
Scavenger E3 = Zeolite HY (CBV 600, Zeolyst) with SiO₂/Al₂O₃ mole ratio 5.2:1, nominal cation form H⁺, Unit cell size 24 Å and surface area 660 m²/g
Scavenger E4 = Si-BEA* prepared according to WO2013117537, example 6.
Scavenger E5 = Si-MWW prepared according to WO2013117537, example 4.
Scavenger E6 = Zeolite HY (CBV 780, Zeolyst) with SiO₂/Al₂O₃ mole ratio 80:1, nominal cation form H⁺, Unit cell size 24 Å and surface area 780 m2/g
Scavenger E7 = Zeolite HY (CBV 720, Zeolyst) with SiO₂/Al₂O₃ mole ratio 30:1, nominal cation form H⁺, Unit cell size 24 Å and surface area 780 m²/g
HY-Zeolite zeolite (SAR 30) (=CBV 720)
Scavenger E8 = Zeolite HY (CBV 712, Zeolyst) with SiO₂/Al₂O₃ mole ratio 12:1, nominal cation form NH₄⁺, Unit cell size 24 Å and surface area 730 m²/g
Scavenger E9 = H-BEA* prepared according to WO2018167143, example 2.1. a)
Scavenger E10 = Extrudate of Zeolite HY containing 20wt% SiO₂ as Binder (diameter 2mm)
Scavenger E11 = Extrudate of Zeolite HY containing 20wt% ZrO₂ as Binder (diameter 2mm)
Scavenger E12 = Extrudate of Zeolite HY containing 20wt% Al₂O₂ as Binder (diameter 2mm)
Scavenger E13 = Extrudate of Zeolite HY containing 10wt% SiO2 and 10 wt% Al₂O₃ as Binder (diameter 2mm)
Scavenger C1 Molsieb 13X, NaX Zeolite (as in US4061662)

### POLYISOCYANATES

### Polyisocyanate P1

Polyisocyanate prepared by trimerizing some of the isocyanate groups of 1,6 diisocyanatohexane (HDI), and containing isocyanurate groups, and distilling of the monomer, said polyisocyanate being composed substantially of tris(6-isocyanatohexyl) isocyanurate and its higher homologs, with an NCO content of 22.2% and a viscosity at 23°C of 2800 mPa*s (commercially available as Basonat^{®} HI 100 at BASF SE, Ludwigshafen, Germany)

### Polyisocyanate P2

Polyisocyanate prepared by biuretizing some of the isocyanate groups of 1,6 diisocyanatohexane (HDI), distilling of the monomer, and said polyisocyanate containing biuret groups, with an NCO content of 21.8% and a viscosity at 23°C of 4100 mPa*s (commercially available as Basonat^{®} HB 100 at BASF SE, Ludwigshafen, Germany)

### Polyisocyanate P3

Polyisocyanate prepared by trimerizing and urethanizing / allophanatizing some of the isocyanate groups of 1,6 diisocyanatohexane (HDI) in presence of an alcohol, distilling of the monomer, and containing both isocyanurate and allophanate groups, with an NCO content of 19.5% and a viscosity at 23°C of 350 mPa*s (commercially available as Basonat^{®} HA 3000 at BASF SE, Ludwigshafen, Germany)

### Polyisocyanate P4

Polyisocyanate prepared by trimerizing and urethanizing / allophanatizing some of the isocyanate groups of 1,6 diisocyanatohexane (HDI) in presence of an alcohol, distilling of the monomer, and containing both isocyanurate and allophanate groups, with an NCO content of 22.0% and a viscosity at 23°C of 1200 mPa*s (commercially available as Basonat^{®} HA 1000 at BASF SE, Ludwigshafen, Germany)

### Polyisocyanate P5

Polyisocyanate prepared by trimerizing some of the isocyanate groups of Isophorone diisocyanate (IPDI; 5-isocyanatomethyl-3,3,5-tri-methyl-1-cyclohexyl isocyanate), distilling of the monomer, and containing isocyanurate groups, said polyisocyanate being composed substantially the isocyanurate trimer of IPDI and its higher homologs, with an NCO content of 11.7%, a solid content of 70% (in butylacetate) and a viscosity at 23°C of 800 mPa*s

### Polyisocyanate P6

Polyisocyanate prepared by trimerizing some of the isocyanate groups of 1,6 diisocyanatohexane (HDI), distilling of the monomer, and containing basically both isocyanurate and iminooxadiozinedione groups, with an NCO content of 23.3% and a viscosity at 23°C of 800 mPa*s (commercially available as Desmodur^{®} N 3900 at Covestro SE, Leverkusen, Germany)

### Polyisocyanate P7

Polyisocyanate prepared by trimerizing some of the isocyanate groups of 1,6 diisocyanatohexane (HDI), distilling of the monomer, and containing basically both isocyanurate and iminooxadiozinedione groups, with an NCO content of 23.2% and a viscosity at 23°C of 780 mPa*s (commercially available as Basonat HI^{®} 3000 at BASF SE, Ludwigshafen, Germany)

### Polyisocyanate P8

Polyisocyanate prepared by oligomerizing some of the isocyanate groups of 1,6 diisocyanatohexane (HDI), distilling of the monomer, and containing basically both isocyanurate and uredi-one groups, with an NCO content of 23.0% and a viscosity at 23°C of 600 mPa*s (commercially available as Tolonate^{™} HDT LV2 at Vencorex, France)

### Polyisocyanate P9

Polyisocyanate prepared by biuretization of the isocyanate groups of 1,6 diisocyanatohexane (HDI), distilling of the monomer and with an NCO content of 21.3% and a viscosity at 23°C of 7500 mPa*s

### APPLICATION EXAMPLES

300 g Polyisocyanate P1 were mixed with 1.4 g HDI (Desmodur H - Covestro), in a 500 ml laboratory flask. The corresponding mixture contained 0.7 wt% HDI (measured via GC). Consequently, the mixture is divided in 30.0 g portions.

### Ex01

To 30.0 g of the aforementioned portions are added 1.5 g of Scavenger E1, the solution was mixed over 4 days at room temperature using a tumbling mixer. The HDI with GC is then measured to be 0.00 wt%

### Ex02

To 30.0 g of the aforementioned portions are added 1.5 g of Scavenger E2, the solution was mixed over 4 days at room temperature using a tumbling mixer. The HDI with GC is then measured to be 0.07 wt%

### Ex03

To 30.0 g of the aforementioned portions are added 1.5 g of Scavenger E4, the solution was mixed over 4 days at room temperature using a tumbling mixer. The HDI with GC is then measured to be 0.09 wt%

### Ex04

To 30.0 g of the aforementioned portions are added 1.5 g of Scavenger E5, the solution was mixed over 4 days at room temperature using a tumbling mixer. The HDI with GC is then measured to be 0.08 wt%

### Ex05

15.13 g Polyisocyanate P2 were mixed with 0.75 g Scavenger E9, in a 25 ml laboratory flask. The corresponding mixture contained 0.22 wt% HDI (measured via GC). Consequently, the solution was mixed over 4 days at room temperature using a tumbling mixer. The HDI with GC is then measured to be 0.08 wt%

### Ex06 - Ex15 and Ref1 - Ref3

In same way than on the Ex05, different scavengers are added to commercially available polyisocyanates and mixed over 4 days at room temperature using a tumbling mixer. The diisocyanate content (HDI, IPDI) are measured before and after the scavenging of monomer.

### Ex16 - Ex17

In same way as in the Ex05, 5 wt% of scavengers are added to commercially available polyisocyanates and mixed over 1H at 100°C in a 4-neck round bottom flask equipped with a thermometer (coupled with a temperature regulated oil-bath), mechanical stirring, a cold-water condenser and nitrogen inlet. The diisocyanate content (HDI, IPDI) are measured before and after the scavenging of monomer.

### Ex18 - Ex22

In same way as in the Ex05, different scavenger extrudates are added to commercially available polyisocyanates in a 25 ml laboratory flask and mixed over 7 days at room temperature using a tumbling mixer. After filtration, the diisocyanate contents (HDI) are measured via GC before and after the scavenging of monomer.

### Ex23

In same way as in the Ex05, scavenger extrudate is added to commercially available polyisocyanate in a 25 ml laboratory flask and mixed over 3 days at 60 °C using a tumbling mixer. After filtration, the diisocyanate contents (HDI) are measured via GC before and after the scavenging of monomer.

| Example | Polyisocyanates | Scavengers | Scavenger content (wt%) | Diisocyanate content start (wt%) | Dilsocyanate content end (wt%) |
|---|---|---|---|---|---|
| Ex06 | P2 | E4 | 5 | 0.22 | 0.03 |
| Ex07 | P2 | E5 | 5 | 0.22 | 0.05 |
| Ex08 | P2 | E6 | 5 | 0.22 | 0.04 |
| Ex09 | P2 | E7 | 5 | 0.22 | 0.04 |
| Ex10 | P2 | E8 | 5 | 0.22 | 0.03 |
| Ex11 | P2 | E2 | 5 | 0.22 | 0.09 |
| Ex12 | P2 | E3 | 5 | 0.22 | 0.02 |
| Ex13 | P3 | E5 | 3 | 0.09 | 0.00 |
| Ex14 | P4 | E4 | 3 | 0.15 | 0.04 |
| Ex15 | P5 | E8 | 3 | 0.22 | 0.07 |
| Ex16 | P2 | E8 | 3 | 0.17 | 0.05 |
| Ex17 | P6 | E8 | 5 | 0.29 | 0.08 |
| Ex18 | P7 | E10 | 5 | 0.11 | 0.05 |
| Ex19 | P7 | E11 | 5 | 0.11 | 0.05 |
| Ex20 | P7 | E12 | 5 | 0.11 | 0.05 |
| Ex21 | P7 | E13 | 5 | 0.11 | 0.05 |
| Ex22 | P8 | E13 | 7 | 0.16 | 0.08 |
| Ex23 | P9 | E12 | 10 | 0,13 | 0,08 |
| Ref1 | P3 | C1 | 3 | 0.20 | 0.19 |
| Ref2 | P2 | C1 | 3 | 0.25 | 0.24 |
| Ref3 | P1 | C1 | 3 | 0.17 | 0.17 |

## Claims

1. A process for the removal of residual monomeric aliphatic isocyanate from a reaction mixture comprising aliphatic polyisocyanate comprising
(i) providing a reactor containing a scavenger comprising a zeolitic material, wherein the zeolitic material comprises SiO₂ and optionally X₂O₃ in its framework structure, wherein X is a trivalent element;
(ii) providing a reaction mixture comprising aliphatic polyisocyanate and monomeric aliphatic isocyanate;
(iii) contacting the scavenger in the reactor with the reaction mixture provided in (ii) at a temperature lower than the boiling point of the residual monomeric aliphatic isocyanate for obtaining a product comprising aliphatic polyisocyanate with a reduced monomeric aliphatic isocyanate content,
wherein if the zeolitic material comprises X₂O₃, the zeolitic material has an SiO₂ to X₂O₃ molar ratio higher than 2.8:1, preferably higher than 5:1, more preferably higher than 30:1.

2. The process according to claim 1, wherein the product comprising aliphatic polyisocyanate has a monomeric aliphatic isocyanate content below 0.8 wt%, preferably below 0.5 wt%, very preferably below 0.1 wt%.

3. The process according to any of the preceding claims, wherein step (iii) is conducted at a temperature of up to 105 °C, preferably of up to 85 °C.

4. The process according to any of the preceding claims, wherein X is selected from the group consisting of B, Al, Ga, In, Ti, La, and mixtures of two or more thereof, wherein preferably X is Al and/or B, wherein more preferably X is Al.

5. The process according to any of the preceding claims, wherein the zeolitic material has a framework structure containing 10 and/or 12 membered rings, wherein preferably the framework type of the zeolitic material is selected from the group consisting of BEA, FAU, GME, MOR, OFF, FER, HEU, MEL, MFI, MWW, RRO, TON, including mixed structures of two or more thereof, preferably from the group consisting of BEA, FAU, GME, MOR, FER, MFI, MWW, including mixed structures of two or more thereof, more preferably from the group consisting of BEA, FAU, MOR, FER, MFI, including mixed structures of two or more thereof, more preferably the zeolitic material has the FAU and/or MFI framework structure type, and more preferably the FAU framework structure type.

6. The process according to any of the preceding claims, wherein the zeolitic material has the FAU framework structure type, wherein preferably the zeolitic material contains one or zeolites having an FAU-type framework structure selected from the group consisting of zeolite Y, ECR-30, ZSM-20, LZ-210, SAPO-37, US-Y, CSZ-1, ZSM-3, Faujasite, and mixtures of two or more thereof,
preferably from the group consisting of zeolite Y, ECR-30, ZSM-20, LZ-210, US-Y, CSZ-1, ZSM-3, Faujasite, and mixtures of two or more thereof, more preferably from the group consisting of, zeolite Y, ZSM-20, ZSM-3, Faujasite, and mixtures of two or more thereof, more preferably from the group consisting of, zeolite Y, Faujasite, and mixtures of two or more thereof, wherein more preferably the one or more zeolites having an FAU-type framework structure comprise and/or zeolite Y, preferably zeolite Y, wherein more preferably the one or more zeolites having an FAU-type framework structure is zeolite Y.

7. The process according to any of the preceding claims, wherein the zeolitic material has the *BEA framework structure type.

8. The process according to any of the preceding claims, wherein the zeolitic material has the MFI framework structure type.

9. The process according to any of the preceding claims, wherein the zeolitic material does not contain a metal cation.

10. The process of any one of embodiments 1 to 8, wherein the zeolitic material is in the H-form, NH4-form or Na-form compensating for the resulting negative lattice charge due to isomorphous substitution of a framework tetravalent silicon by a trivalent aluminum atom.

11. The process according to any of the preceding claims, wherein the aliphatic polyisocyanate is based on isocyanurates, biurets, urethanes, allophanates, iminooxadiozinedione, uretdiones, prepolymers and mixtures thereof.

12. The process according to any of the preceding claims, wherein the monomeric aliphatic isocyanate is a diisocyanate selected from the group consisting of 1,6-hexamethylene diisocyanate, 1,5-pentamethylene diisocyanate, isophorone diisocyanate, 1,3-bis(isocyanatomethyl)cyclohexane, 4,4'-di(isocyanatocyclohexyl)methane, and 2,4'-di(isocyanatocyclohexyl)methane.

13. The process according to any of the preceding claims, wherein the process is conducted as a continuous process.

14. The process according to any of the preceding claims, wherein the scavenger is provided as an extrudate.

15. A process for preparing a polyurethane coating material, which comprises reacting a product comprising aliphatic polyisocyanate according to any of the preceding claims with a hydrophilic substance containing an NCO-reactive moiety, e.g. polyetherol, sulfonate and/or phosphate, optionally neutralizing acidic groups with amines, e.g. trialkylamines as e.g. trimethylamine or dimethylcyclohexylamine.

16. A process for preparing a polyurethane coating material, which comprises reacting a product comprising aliphatic polyisocyanate according to any one of claims 1 to 14 with at least one binding agent selected from the group consisting of polyacrylate polyols, polyester polyols, polyether polyols, polyurethane polyols, polyurea polyols, polyetherols, polycarbonates, polyester-polyacrylate polyols, polyester-polyurethane polyols, polyurethane-polyacrylate polyols, polyurethane-modified alkyd resins, fatty acid-modified polyester-polyurethane polyols, copolymers with allyl ethers, and copolymers and graft polymers of the stated groups of compounds.

17. A process for preparing a polyurethane coating material, which comprises reacting a product comprising aliphatic polyisocyanate according to any one of claims 1 to 14 as a curing agent in a coating composition, in primers, surfacers, pigmented topcoat, basecoat, and clearcoat materials in the segment of refinish, in automotive refinish, large-vehicle coating, plastic and wood coating, and also as a curing agent in coating materials, adhesives, and sealants.

## Patentansprüche

1. Verfahren zur Entfernung von restlichem monomerem aliphatischem Isocyanat aus einer Reaktionsmischung, die aliphatisches Polyisocyanat umfasst, umfassend
(i) Bereitstellen eines Reaktors, der einen Fänger enthält, der ein zeolithisches Material umfasst, wobei das zeolithische Material SiO₂ und gegebenenfalls X₂O₃ in seiner Gerüststruktur umfasst, wobei X ein dreiwertiges Element ist;
(ii) Bereitstellen einer Reaktionsmischung, die aliphatisches Polyisocyanat und monomeres aliphatisches Isocyanat umfasst;
(iii) Kontaktieren des Fängers in dem Reaktor mit der in (ii) bereitgestellten Reaktionsmischung bei einer Temperatur unter dem Siedepunkt des restlichen monomeren aliphatischen Isocyanats, um ein Produkt zu erhalten, das aliphatisches Polyisocyanat mit einem reduzierten Gehalt an monomerem aliphatischem Isocyanat umfasst,
wobei, falls das zeolithische Material X₂O₃ umfasst, das zeolithische Material ein molares Verhältnis von SiO₂ zu X₂O₃ größer als 2,8:1, vorzugsweise größer als 5:1, bevorzugter größer als 30:1 hat.

2. Verfahren nach Anspruch 1, wobei das Produkt, welches aliphatisches Polyisocyanat umfasst, einen Gehalt an monomerem aliphatischem Isocyanat unter 0,8 Gew.%, vorzugsweise unter 0,5 Gew.%, sehr bevorzugt unter 0,1 Gew.% hat.

3. Verfahren nach einem der vorhergehenden Ansprüche, wobei Schritt (iii) bei einer Temperatur bis zu 105 °C, vorzugsweise bis zu 85 °C durchgeführt wird.

4. Verfahren nach einem der vorhergehenden Ansprüche, wobei X ausgewählt ist aus der Gruppe bestehend aus B, Al, Ga, In, Ti, La und Mischungen von zwei oder mehr davon, wobei vorzugsweise X Al und/oder B ist, wobei bevorzugter X Al ist.

5. Verfahren nach einem der vorhergehenden Ansprüche, wobei das zeolithische Material eine Gerüststruktur hat, die 10- und/oder 12-gliedrige Ringe enthält, wobei der Gerüsttyp des zeolithischen Materials vorzugsweise ausgewählt ist aus der Gruppe bestehend aus BEA, FAU, GME, MOR, OFF, FER, HEU, MEL, MFI, MWW, RRO, TON, einschließlich gemischter Strukturen von zwei oder mehr davon, vorzugsweise aus der Gruppe bestehend aus BEA, FAU, GME, MOR, FER, MFI, MWW, einschließlich gemischter Strukturen von zwei oder mehr davon, bevorzugter aus der Gruppe bestehend aus BEA, FAU, MOR, FER, MFI, einschließlich gemischter Strukturen von zwei oder mehr davon, wobei bevorzugter das zeolithische Material den Gerüststrukturtyp FAU und/oder MFI hat und bevorzugter den Gerüststrukturtyp FAU.

6. Verfahren nach einem der vorhergehenden Ansprüche, wobei das zeolithische Material den Gerüststrukturtyp FAU hat, wobei das zeolithische Material vorzugsweise ein oder mehrere Zeolithe mit einem Gerüststrukturtyp FAU ausgewählt aus der Gruppe bestehend aus Zeolith Y, ECR-30, ZSM-20, LZ-210, SAPO-37, US-Y, CSZ-1, ZSM-3, Faujasit und Mischungen von zwei oder mehr davon enthält,
vorzugsweise aus der Gruppe bestehend aus Zeolith Y, ECR-30, ZSM-20, LZ-210, US-Y, CSZ-1, ZSM-3, Faujasit und Mischungen von zwei oder mehr davon, bevorzugter aus der Gruppe bestehend aus Zeolith Y, ZSM-20, ZSM-3, Faujasit und Mischungen von zwei oder mehr davon, bevorzugter aus der Gruppe bestehend aus Zeolith Y, Faujasit und Mischungen von zwei oder mehr davon, wobei bevorzugter der eine oder die mehreren Zeolithe mit einem Gerüststrukturtyp FAU haben und/oder Zeolith Y umfassen, vorzugsweise Zeolith Y, wobei bevorzugter der eine oder die mehreren Zeolithe mit einem Gerüststrukturtyp FAU Zeolith Y ist/sind.

7. Verfahren nach einem der vorhergehenden Ansprüche, wobei das zeolithische Material den Gerüststrukturtyp *BEA hat.

8. Verfahren nach einem der vorhergehenden Ansprüche, wobei das zeolithische Material den Gerüststrukturtyp MFI hat.

9. Verfahren nach einem der vorhergehenden Ansprüche, wobei das zeolithische Material kein Metallkation enthält.

10. Verfahren nach einem der Ansprüche 1 bis 8, wobei das zeolithische Material in der H-Form, NH₄-Form oder Na-Form vorliegt, welche die resultierende negative Gitterladung infolge von isomorpher Substitution eines vierwertigen Siliciums im Gerüst durch ein dreiwertiges Aluminiumatom kompensiert.

11. Verfahren nach einem der vorhergehenden Ansprüche, wobei das aliphatische Polyisocyanat auf Isocyanuraten, Biuretverbindungen, Urethanen, Allophanaten, Iminooxadiozindion, Uretdionen, Präpolymeren und Mischungen davon basiert.

12. Verfahren nach einem der vorhergehenden Ansprüche, wobei das monomere aliphatische Isocyanat ein Diisocyanat ausgewählt aus der Gruppe bestehend aus 1,6-Hexamethylendiisocyanat, 1,5-Pentamethylendiisocyanat, Isophorondiisocyanat, 1,3-Bis(isocyanatomethyl)cyclohexan, 4,4'-Di(isocyanatocyclohexyl)methan und 2,4'-Di(isocyanatocyclohexyl)methan ist.

13. Verfahren nach einem der vorhergehenden Ansprüche, wobei das Verfahren als kontinuierliches Verfahren durchgeführt wird.

14. Verfahren nach einem der vorhergehenden Ansprüche, wobei der Fänger als Extrudat bereitgestellt wird.

15. Verfahren zur Herstellung eines Polyurethanbeschichtungsmaterials, das Umsetzen eines Produkts, welches aliphatisches Polyisocyanat gemäß einem der vorhergehenden Ansprüche umfasst, mit einer hydrophilen Substanz, die einen NCO-reaktiven Anteil enthält, z. B. Polyetherol, -sulfonat und/oder -phosphat, gegebenenfalls Neutralisieren von sauren Gruppen mit Aminen, z. B. Trialkylaminen, wie z. B. Triethylamin oder Dimethylcyclohexylamin, umfasst.

16. Verfahren zur Herstellung eines Polyurethanbeschichtungsmaterials, das Umsetzen eines Produkts, welches aliphatisches Polyisocyanat gemäß einem der Ansprüche 1 bis 14 umfasst, mit mindestens einem Bindemittel ausgewählt aus der Gruppe bestehend aus Polyacrylatpolyolen, Polyesterpolyolen, Polyetherpolyolen, Polyurethanpolyolen, Polyharnstoffpolyolen, Polyetherolen, Polycarbonaten, Polyesterpolyacrylatpolyolen, Polyesterpolyurethanpolyolen, Polyurethanpolyacrylatpolyolen, polyurethanmodifizierten Alkydharzen, fettsäuremodifizierten Polyesterpolyurethanpolyolen, Copolymeren mit Allylethern, und Copolymeren und Pfropfpolymeren der angegebenen Gruppen von Verbindungen umfasst.

17. Verfahren zur Herstellung eines Polyurethanbeschichtungsmaterials, das Umsetzen eines Produkts, welches aliphatisches Polyisocyanat gemäß einem der Ansprüche 1 bis 14 umfasst, als Härtungsmittel in einer Beschichtungszusammensetzung, in Grundierungen, Spachtelmassen, pigmentierten Deckschicht (Topcoat)-, Grundschicht (Basecoat)- und Klarlackschicht (Clearcoat)-Materialien auf dem Segment von Reparaturlack, in Automobilreparaturlack, Beschichtung von Großfahrzeugen, Beschichtung von Kunststoff und Holz sowie als Härtungsmittel in Beschichtungsmaterialien, Klebstoffen und Dichtungsmitteln umfasst.

## Revendications

1. Procédé pour l'élimination d'isocyanate aliphatique monomérique résiduel d'un mélange réactionnel comprenant un polyisocyanate aliphatique comprenant
(i) la fourniture d'un réacteur contenant un agent de piégeage comprenant un matériau zéolithique, le matériau zéolithique comprenant SiO₂ et éventuellement X₂O₃ dans sa structure de cadre, X étant un élément trivalent ;
(ii) la fourniture d'un mélange réactionnel comprenant un polyisocyanate aliphatique et un isocyanate aliphatique monomérique ;
(iii) la mise en contact de l'agent de piégeage dans le réacteur avec le mélange réactionnel fourni en (ii) à une température inférieure au point d'ébullition de l'isocyanate aliphatique monomérique résiduel pour l'obtention d'un produit comprenant un polyisocyanate aliphatique doté d'une teneur en isocyanate aliphatique monomérique réduite,
si le matériau zéolithique comprend X₂O₃, le matériau zéolithique possédant un rapport molaire de SiO₂ sur X₂O₃ supérieur à 2,8 : 1, préférablement supérieur à 5 : 1, plus préférablement supérieur à 30 : 1.

2. Procédé selon la revendication 1, le produit comprenant un polyisocyanate aliphatique ayant une teneur en isocyanate aliphatique monomérique inférieure à 0,8 % en poids, préférablement inférieure à 0,5 % en poids, très préférablement inférieure à 0,1 % en poids.

3. Procédé selon l'une quelconque des revendications précédentes, l'étape (iii) étant conduite à une température allant jusqu'à 105 °C, préférablement jusqu'à 85 °C.

4. Procédé selon l'une quelconque des revendications précédentes, X étant choisi dans le groupe constitué par B, Al, Ga, In, Ti, La, et des mélanges de deux ou plus de ceux-ci, préférablement X étant Al et/ou B, plus préférablement X étant Al.

5. Procédé selon l'une quelconque des revendications précédentes, le matériau zéolithique ayant une structure de cadre contenant des cycles à 10 et/ou 12 chaînons, préférablement le type de cadre du matériau zéolithique étant choisi dans le groupe constitué par BEA, FAU, GME, MOR, OFF, FER, HEU, MEL, MFI, MWW, RRO, TON, y compris des structures mixtes de deux ou plus de ceux-ci, préférablement dans le groupe constitué par BEA, FAU, GME, MOR, FER, MFI, MWW, y compris des structures mixtes de deux ou plus de ceux-ci, plus préférablement dans le groupe constitué par BEA, FAU, MOR, FER, MFI, y compris des structures mixtes de deux ou plus de ceux-ci, plus préférablement le matériau zéolithique ayant le type de structure de cadre FAU et/ou MFI, et plus préférablement le type de structure de cadre FAU.

6. Procédé selon l'une quelconque des revendications précédentes, le matériau zéolithique ayant le type de structure de cadre FAU, préférablement le matériau zéolithique contenant une ou plusieurs zéolithes ayant une structure de cadre de type FAU choisie dans le groupe constitué par une zéolithe Y, ECR-30, ZSM-20, LZ-210, SAPO-37, US-Y, CSZ-1, ZSM-3, une faujasite, et des mélanges de deux ou plus de ceux-ci,
préférablement dans le groupe constitué par une zéolithe Y, ECR-30, ZSM-20, LZ-210, US-Y, CSZ-1, ZSM-3, une faujasite, et des mélanges de deux ou plus de ceux-ci, plus préférablement dans le groupe constitué par une zéolithe Y, ZSM-20, ZSM-3, une faujasite, et des mélanges de deux ou plus de ceux-ci, plus préférablement dans le groupe constitué par une zéolithe Y, une faujasite, et des mélanges de deux ou plus de ceux-ci, plus préférablement la ou les zéolithes ayant une structure de cadre de type FAU comprenant et/ou une zéolithe Y, préférablement une zéolithe Y, plus préférablement la ou les zéolithes ayant une structure de cadre de type FAU étant une zéolithe Y.

7. Procédé selon l'une quelconque des revendications précédentes, le matériau zéolithique ayant le type de structure de cadre *BEA.

8. Procédé selon l'une quelconque des revendications précédentes, le matériau zéolithique ayant le type de structure de cadre MFI.

9. Procédé selon l'une quelconque des revendications précédentes, le matériau zéolithique ne contenant pas un cation métallique.

10. Procédé selon l'un quelconque des modes de réalisation 1 à 8, le matériau zéolithique étant sous la forme H, la forme NH4 ou la forme Na compensant pour la charge de réseau négative résultante due à une substitution isomorphe d'un silicium tétravalent de cadre par un atome d'aluminium trivalent.

11. Procédé selon l'une quelconque des revendications précédentes, le polyisocyanate aliphatique étant à base d'isocyanurates, de biurets, d'uréthanes, d'allophanates, d'iminooxadiazinedione, d'uretdiones, de prépolymères et de mélanges correspondants.

12. Procédé selon l'une quelconque des revendications précédentes, l'isocyanate aliphatique monomérique étant un diisocyanate choisi dans le groupe constitué par le 1,6-diisocyanate d'hexamethylène, le 1,5-diisocyanate de pentaméthylène, un diisocyanate d'isophorone, le 1,3-bis(isocyanatométhyl)cyclohexane, le 4,4'-di(isocyanatocyclohexyl)méthane, et le 2,4'-di(isocyanatocyclohexyl)méthane.

13. Procédé selon l'une quelconque des revendications précédentes, le procédé étant conduit comme un procédé continu.

14. Procédé selon l'une quelconque des revendications précédentes, l'agent de piégeage étant fourni comme un extrudat.

15. Procédé pour la préparation d'un matériau de revêtement de polyuréthane, qui comprend la mise en réaction d'un produit comprenant un polyisocyanate aliphatique selon l'une quelconque des revendications précédentes avec une substance hydrophile contenant un groupement réactif avec NCO, par ex. un polyétherol, un sulfonate et/ou un phosphonate, éventuellement la neutralisation de groupes acides avec des amines, par ex. des trialkylamines comme par ex. la triméthylamine ou la diméthylcyclohexylamine.

16. Procédé pour la préparation d'un matériau de revêtement de polyuréthane, qui comprend la mise en réaction d'un produit comprenant un polyisocyanate aliphatique selon l'une quelconque des revendications 1 à 14 avec au moins un agent liant choisi dans le groupe constitué par des polyacrylate polyols, des polyester polyols, des polyuréthanes polyols, des polyurée polyols, des polyétherols, des polycarbonates, des polyester-polyacrylate polyols, des polyester-polyuréthane polyols, des polyuréthane-polyacrylate polyols, des résines d'alkyde modifiées par un polyuréthane, des polyester-polyuréthane polyols modifiés par un acide gras, des copolymères avec des éthers d'allyle, et des polymères greffés et des copolymères des groupes de composés mentionnés.

17. Procédé pour la préparation d'un matériau de revêtement de polyuréthane, qui comprend la mise en réaction d'un produit comprenant un polyisocyanate aliphatique selon l'une quelconque des revendications 1 à 14 en tant qu'agent de durcissement dans une composition de revêtement, dans des apprêts, des apprêts surfaçants, un revêtement de finition pigmenté, un revêtement de base, et des matériaux de revêtement transparent dans le segment de la retouche, dans la retouche automobile, le revêtement de gros véhicules, le revêtement de matière plastique et de bois, et également en tant qu'agent de durcissement dans des matériaux de revêtement, des adhésifs et des agents d'étanchéité.
